# EUROPEAN PATENT APPLICATION

(11) **EP 4 212 371 A1**
(43) Date of publication of application: **19.07.2023**
(21) Application number: 22151203.1
(22) Date of filing: 12.01.2022
(51) Int. Cl.: B60K 1/00, B60K 11/02

(54) **A THERMAL MANAGEMENT SYSTEM FOR A VEHICLE**

(71) Applicant: VOLVO TRUCK CORPORATION, 405 08 Göteborg (SE)
(72) Inventor: GRÖBEL, Michael, 449 90 Nödinge-Nol (SE)
(74) Representative: Kransell & Wennborg KB

(57) **Abstract**

The invention relates to a thermal management system (20) for an energy storage system (ESS) (4) of a vehicle (5), the thermal management system comprising: an air compressor (30) for supplying compressed air to a pneumatic auxiliary system (40) of the vehicle; a heat exchanger (50) arranged downstream of the air compressor to receive compressed air from the air compressor, wherein the heat exchanger is operable to decrease a temperature of the compressed air being transferred through the heat exchanger, and wherein the heat exchanger is further arranged in fluid communication with the ESS to permit transfer of excessive energy generated in the heat exchanger to the ESS.

## Description

### TECHNICAL FIELD

The invention relates to a thermal management system for an energy storage system of a vehicle, in particular a partly electrical vehicle or fully electrical vehicle. The invention also relates to a vehicle comprising such a thermal management system for an energy storage system. The invention is applicable on trucks, cars, buses and working machines within the fields of industrial construction machines or construction equipment, in particular partly or fully electric-powered vehicles and working machines. Although the invention will be described with respect to a truck, the invention is not restricted to this particular machine, but may also be used in other vehicles such as working machines, wheel loaders, articulated haulers, excavators, backhoe loaders, and also in other types of vehicles such as busses, cars, autonomous vehicles etc. Additionally, the invention may be used in a number of different types of electrical-powered vehicles such as fully electrical vehicles and partly electrical vehicles e.g. hybrid vehicles such as vehicles having an internal combustion engine and an electrical machine, a number of fuels cells and an electrical machine etc.

### BACKGROUND

In the field of batteries and battery pack systems for vehicles, such as partly and fully electrical vehicles, there are several different types of arrangement for storing the batteries in the vehicles and for connecting the batteries to other components of the vehicle electric system, including e.g. the electric propulsion system.

The batteries in partly and fully electricals vehicles are used for powering not only the vehicle, but also other electric systems, thus there is an increasing demand on providing sufficiently powerful batteries to ensure a reliable operation of the vehicle. Such batteries are most often rechargeable batteries and consist of several battery cells that may be connected in series and/or in parallel forming a complete battery pack for the vehicle. However, the energy flowing into the battery pack as it is charged from an external power supply source or discharged to power the vehicle and its accessories generally causes heating in the battery cells and their interconnection systems, i.e. other heat generating components in the vehicle. Thus, the batteries are typically surrounded by a cooling fluid which is cooled or warmed by external heaters.

However, batteries are sensible to high and low temperatures. By way of example, a too high temperature of the batteries may lower their performance and also shorten their lifetime. Batteries may also need to be warmed up to operate in a proper manner. Thus, thermal management for batteries and other electric systems is central to the performance and longevity of the systems, partly as an efficient thermal management system will enable electric vehicles to drive greater distances. Further, on vehicles without internal combustion engines, e.g. fully electric vehicles, the energy for temperature control is typically supplied by the batteries, which may shorten the battery load, and also the vehicle driving range.

Thus, in connection with theses types of vehicles, efficient temperature control of the batteries is central to ensure a reliable operation of the batteries in ordinary use of the vehicle.

In view of the above, it would be a desire to improve thermal management of a battery in an electric vehicle in an efficient manner in order to at least partly extend the lifetime of the battery. Also, it may be a desire to improve thermal management control of the batteries in order to maintain the batteries of an electric vehicle in an appropriate operating temperature range.

### SUMMARY

An object of the invention is to provide an improved thermal management system for an energy storage system of a vehicle, such as an electrical vehicle, which thermal management system aims at increasing utilization of energy generated during operation of the vehicle.

The object is at least partly achieved by a thermal management system according to claim 1. According to a first aspect of the present invention, there is provided a thermal management system for an energy storage system (ESS) of a vehicle. The thermal management system comprises the energy storage system for storing electrical energy. Also, the thermal management system comprises an air compressor for supplying compressed air to a pneumatic auxiliary system of the vehicle. The thermal management system further comprises a heat exchanger arranged downstream of the air compressor to receive compressed air from the air compressor. The heat exchanger is operable to decrease a temperature of the compressed air being transferred through the heat exchanger. Moreover, the heat exchanger is arranged in fluid communication with the ESS to permit transfer of excessive energy generated in the heat exchanger to the ESS.

In other words, the heat exchanger is arranged in fluid communication with the ESS to permit transfer of excessive energy generated in the heat exchanger when decreasing the temperature of the compressed air.

In this manner, it is believed that an optimized thermal management system for an ESS of a vehicle is provided in terms of total energy utilization. The invention is at least partly based on the insight of extending the use of an air compressor in a vehicle. More specifically, an air compressor is often an obligatory component in vehicles, such as trucks and busses due to air suspension, cab suspension, brakes, etc. During the compression cycle of the air in the air compressor, the temperature of the air heavily increases, sometimes up to temperatures above 450 degrees Celsius. In many types of vehicles, the hot air generated from the air compressor is simply cooled down before it is transferred into the one or several air systems of the truck. By the arrangement of the example embodiments of the invention, the air compressor is connected to the heat exchanger to supply hot compressed air, and which is operable to decrease a temperature of the hot compressed air transferred therethrough (i.e. through the heat exchanger). Hence, the temperature of the air compressed in the air compressor is decreased prior to the pneumatic auxiliary system. Moreover, the heat exchanger is arranged in fluid communication with the ESS to transfer excessive energy (to the ESS) generated in the heat exchanger when decreasing the temperature of the compressed air in the heat exchanger. In this manner, it becomes possible to use the heat produced by the air compressor when compressing the air without affecting the general function of the vehicle air system. In other words, the transfer of excessive energy is used for controlling the temperature of the ESS, e.g. a battery pack arrangement. The term "excessive energy" generally corresponds to thermal energy. By way of example, the transfer of excessive energy is used for controlling the temperature of a fluid medium such as a coolant liquid circulating around the battery pack arrangement to regulate the temperature of the battery pack arrangement.

To this end, the example embodiments of the invention may contribute to improve the operating range of the ESS, and thus the operating range of the vehicle. Also, the example embodiments of the invention may contribute to extend the battery life. This is possible because the operation of the thermal management system is at least partly based on using waste energy from the heat exchanger, i.e. the temperature control of the ESS is based on using surplus energy from the heat exchanger as compared to prior art systems. Hence, the thermal management system may regulate the temperature of the ESS with almost no extra energy. Further, by utilizing excessive energy as described above, it becomes possible to provide a thermal management system with fewer components than other prior art systems.

The example embodiments of the thermal management system are particularly useful for vehicles such as electrical vehicles, including partly and fully electrical vehicles, hybrid electrical vehicles, plug-in hybrid electrical vehicles or any other type of electrical vehicle. Electrical vehicles are provided with electrical machine(s) and generally an energy storage system such as a battery pack arrangement.

The air compressor is typically a conventional air compressor, as used in vehicles. Such air compressor generally has an inlet for receiving air. The air supplied to the air compressor may be fresh air from the outside of the vehicle.

Typically, the ESS is arranged to power the air compressor. Also, the ESS is typically arranged in fluid communication with the air compressor. In this manner, the ESS is operatively connected or coupled to the air compressor. Accordingly, the ESS is arranged to directly power the air compressor. However, it is also conceivable that the air compressor is powered from a battery that is not part of the traction voltage system, i.e. not part of the ESS that is desirable to control by the thermal management system. For instance, the air compressor may also be powered by an auxiliary battery of the vehicle, such as a low voltage battery. The low voltage battery may be indirectly powered from the ESS. To this end, the air compressor is indirectly powered by the ESS via the auxiliary battery.

Generally, the temperature of the compressed air is decreased prior to supplying the compressed air to the pneumatic auxiliary system. In other words, the heat exchanger is arranged to decrease the temperature of the compressed air prior to supplying the compressed air to the pneumatic auxiliary system. Thus, according to one example embodiment, the heat exchanger is operable to decrease a temperature of the compressed air being transferred through the heat exchanger and prior to supplying the compressed air to the pneumatic auxiliary system. Accordingly, the air compressor is arranged to supply compressed air to the pneumatic auxiliary system via the heat exchanger.

The heat exchanger is arranged in fluid communication with the air compressor. That is, the compressed air from the air compressor is transferable to the heat exchanger. The heat exchanger is arranged to decrease the temperature of the compressed air. According to one example embodiment, the heat exchanger is an integral part of the air compressor. According to one example embodiment, the heat exchanger is a separate part from the air compressor. In any case, the excessive thermal energy is generated in the heat exchanger when the heat exchanger is operated to decrease the temperature of the compressed air.

The heat exchanger is arranged in communication with the air compressor via one (first) fluid passage. Further, the heat exchanger is arranged in communication with the ESS via another (second) fluid passage. Also the heat exchanger is in fluid communication with the pneumatic auxiliary system via yet another (third) fluid passage. Hence, the heat exchanger is connected to the ESS and the pneumatic auxiliary system via two different fluid passages.

As used herein, the term "fluid" or "fluid medium" may typically refers to any one of air, such as compressed air, gas, liquid, plasma etc. According to one example embodiment, the fluid is compressed air. According to one example embodiment, the fluid medium transferred between the heat exchanger and the ESS is a fluid liquid such as a liquid coolant.

The thermal management system may further comprise a control unit arranged to regulate the transfer of excessive energy (e.g. heat) from the heat exchanger to the ESS. Typically, the thermal management system comprises a control unit arranged to regulate the transfer of excessive energy from the heat exchanger to the ESS in response to any one of a vehicle operating condition of the vehicle and an ESS operating condition of the ESS. In other words, the control unit is operable to ensure that excessive energy (such as excessive heat) is only transferred from the heat exchanger to the ESS when there is a need for regulating the temperature of the ESS.

The operating condition is any one of a temperature of the ESS, an outside temperature of the ESS, an outside temperature of the vehicle, a state-of-charge parameter of the ESS, an estimated upcoming driving condition, a predictable driver/driving behavior of the vehicle, and a combination thereof.

By way of example, the control unit is arranged to regulate the transfer of excessive energy (e.g. heat) from the heat exchanger to the ESS if a value of the operating condition is below a threshold value. In case the operating condition is the temperature of the ESS, the control unit is arranged to regulate the transfer of excessive energy from the heat exchanger to the ESS if the temperature of the ESS is below a predetermined temperature threshold. The temperature of the ESS may be monitored by a temperature sensor arranged in connection with the ESS. The determined temperature of the ESS is typically transferred to the control unit. The control unit subsequently compares the determined temperature of the ESS with the predetermined temperature threshold. If the temperature of the ESS is below the predetermined temperature threshold, the control unit is operated to regulate the transfer of excessive energy from the heat exchanger to the ESS.

According to one example embodiment, the thermal management system comprises a control unit arranged to regulate the transfer of excessive energy (e.g. heat) from the heat exchanger to the ESS only in response to a vehicle operating condition of the vehicle. By way of example, the vehicle operating condition is any one of an outside temperature of the vehicle, an estimated upcoming driving condition, a predictable driver/driving behavior of the vehicle, and a combination thereof. According to one example embodiment, the thermal management system further comprises a control unit arranged to regulate the transfer of excessive energy (e.g. heat) from the heat exchanger to the ESS only in response to an ESS operating condition of the ESS.

According to one example embodiment, the control unit is arranged to activate and deactivate the heat exchanger to transfer excessive energy (heat) to the ESS in response to the operating condition of the ESS. By way of example, the operating condition is any one of a temperature of the ESS, an outside temperature of the ESS, a state-of-charge parameter of the ESS, and a combination thereof.

By controlling the transfer of excessive energy from the heat exchanger to the ESS by the control unit, as mentioned above, and in response to an operating condition of the ESS, the control unit is capable of determining when the temperature of the ESS is on an appropriate level, and thus not in need of any further heat from the heat exchanger. Thus, at some point in time, the thermal management system is deactivated, i.e. no further excessive heat is transferred from the heat exchanger to the ESS.

In addition, the operating condition(s) allows for accurate and precise regulation of the temperature of the ESS, thus improving the general efficiency of the thermal management system and the vehicle.

It should be noted that the time period of utilizing excessive energy from the heat exchanger to regulate the temperature of the ESS may vary for different types of thermal management systems and for different types of vehicles. However, the time period may typically be determined by the control unit. In this context, the control unit may be arranged in communication with a temperature sensor of the ESS to receive an indication of the temperature of the ESS. For example, the time period of utilizing excessive energy from the heat exchanger to regulate the temperature of the ESS may be set by the control unit based on the state temperature of the ESS. To this end, the temperature sensor is arranged at or in the ESS to measure the state temperature of the ESS.

According to one example embodiment, the thermal managements system further comprises a controllable sub-device arranged in communication with the heat exchanger and the ESS. The controllable sub-device is operable by the control unit. In this manner, it becomes possible to regulate the amount of thermal energy (excessive energy) transferred from the heat exchanger to the ESS in a simple, yet efficient manner, thereby ensuring that the ESS does not become overheated by the excessive energy from the heat exchanger. Typically, the controllable sub-device is operable by the control unit in response to the operating condition. The operating condition refers to any one of vehicle and the ESS. The controllable sub-device is typically, although not strictly required, a controllable valve. By way of example, the controllable valve is a non-return valve, check valve or the like. In other examples, the controllable valve may be any one of a pneumatic valve, an electro-magnetic valve, an electro-pneumatic valve and a combination thereof.

The controllable sub-device may be arranged in several different manners in order to control the fluid communication between the heat exchanger and the ESS. By way of example, the controllable sub-device is arranged in-between the heat exchanger and the ESS. Hence, the controllable sub-device is arranged in a fluid passage between the heat exchanger and the ESS. Generally, the controllable sub-device is arranged in-between the heat exchanger and the ESS to regulate the flow of the fluid medium transferable between the heat exchanger and the ESS. As such, the controllable sub-device is arranged to control the temperature of the fluid medium transferable between the heat exchanger and the ESS. Typically, the controllable sub-device is arranged to regulate the flow of the fluid medium such as a fluid liquid, e.g. a coolant, from the heat exchanger to the ESS in response to a signal from the control unit and in response to the operating condition, as mentioned above.

Further, the control unit is generally arranged to communicate with the air compressor, the heat exchanger and the ESS so that excessive energy is generally only transferred from the heat exchanger to the ESS when the air compressor is operated. Further, the control unit is generally arranged to communicate with the pneumatic auxiliary system.

When the thermal management system includes a fan or a pump, the control unit is typically also in communication with the fan or the pump.

In other words, the control unit may also be arranged to control the air compressor, the heat exchanger, a fluid transfer device (i.e. a fan or a pump) for circulating a fluid, and also other parts of the vehicle sub systems. In one example, the control unit is at least in communication with any one of the air compressor, the heat exchanger, and the fluid transfer device (the fan or the pump).

By controlling the air compressor with the control unit, the control unit is arranged to secure that the air compressor is operated to warm up the ESS to a sufficient level. According to one example embodiment, the control unit is arranged to control the transfer of compressed air between the air compressor and the heat exchanger in response to the operating condition, as mentioned above. In addition, the control unit can decide to operate the air compressor slightly longer than a normal operation for warming up the air, i.e. the operation of the air compressor normally terminates when an air tank of the vehicle is full. Therefore, it may be advantageously to permit the control unit to control the air compressor. Optional, although strictly not required, the control unit may also be operable to control additional air sub-devices, e.g. to activate them, so that already compressed air will be released. Otherwise a longer running of the air compressor may be limited in time. Examples of some air sub-devices may be auxiliary valves (which may be parts of the thermal management system, but also other vehicle auxiliary valves in the pneumatic system), cab dampers etc.

The control unit can be provided in several different manners. Typically, the control unit is an electronic control unit. The control unit may also be part of the battery management unit. By way of example, the control unit is adapted to set the level of the desired temperature of the ESS. It should be noted that the control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. In line with the example embodiments, the control unit may in one embodiment be an electronic control unit (ECU), which is typically provided as an onboard component of the vehicle. However, at least one portion of the functionality of the control unit may in some alternative embodiments be performed using a remote server such as a cloud server, where the cloud server being network connected to an/the electronic control unit (ECU) comprised with the vehicle.

As mentioned above, according to one example embodiment, the control unit is an electronic control unit (ECU), comprised with the vehicle. The ECU may possibly be manifested as a general-purpose processor, an application specific processor, a circuit containing processing components, a group of distributed processing components, a group of distributed computers configured for processing, a field programmable gate array (FPGA), etc. The control unit may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

According to one example embodiment, the thermal management system further comprises a reservoir arranged downstream of the heat exchanger. The reservoir is typically adapted to accommodate the compressed air. The reservoir provides for accumulating a sufficient amount of compressed air to operate systems such as the brakes etc. Typically, a conventional electric truck is provided with a number of reservoirs in order to secure that there is enough air available for braking even if the air compressor would fail. The tank will also be needed for securing enough airflow, and therefore heat from the air compressor. Accordingly, the heat exchanger transfer the cold compressed air to the reservoir for storage, and then further to the pneumatic auxiliary system.

Typically, although strictly not necessary, the thermal management system further comprises a fluid transfer device, such as a fan or pump, for providing energy to support fluid transfer from the heat exchanger to the ESS. That is, the fluid transfer device is arranged to provide the energy needed to move the fluid in the thermal management system from one location to another location in system. In other words, there is provided a fan or pump for circulation / transfer of the fluid medium between the heat exchanger and the ESS. The fan or pump is in fluid communication with the heat exchanger and the ESS system. The fan or pump is arranged to support the transfer of fluid in the thermal management system, i.e. water, liquid, gas etc., that distributes the heat to the ESS. The fan or pump is arranged between the heat exchanger and the ESS, and typically in a fluid passage. To this end, the fan or pump is configured to direct the fluid medium (and thus the excessive energy) in order to regulate the temperature of the ESS.

The excessive energy generated in the heat exchanger when cooling the compressed air can be used to regulate temperature of parts of the ESS or the entire ESS. According to one example embodiment, the excessive energy generated in the heat exchanger is used to regulate the temperature of the entire ESS. By way of example, when the ESS is a battery pack arrangement, the excessive energy generated in the heat exchanger is used to regulate the temperature of the entire battery pack arrangement. In addition, or alternatively, the excessive energy generated in the heat exchanger is used to regulate the temperature of parts of the battery pack arrangement, e.g. one or more battery packs, one or more battery modules and/or one or more battery cells. In addition, or alternatively, the excessive energy generated in the heat exchanger is used to regulate the temperature of a coolant circulating around the battery pack arrangement. In addition, or alternatively, the excessive energy generated in the heat exchanger is used to regulate the temperature of a coolant circulating inside the battery pack arrangement. In addition, or alternatively, the excessive energy generated in the heat exchanger is used to regulate the temperature of a fluid that stream between a numbers of battery cells. In addition, or alternatively, the excessive energy generated in the heat exchanger is used to regulate the temperature of a fluid electrolyte.

According to one example embodiment, the thermal management system comprises a cooling system configured to regulate the temperature of the pneumatic auxiliary system.

Typically, although not strictly required, the thermal management system forms a fluid circuit with an inlet for air to be compressed in the air compressor and an outlet for connecting to the pneumatic auxiliary system. However, the fluid circuit may in some example embodiments comprise additional fluid passages, supply branches or the like depending on the configuration of the system and the number of components.

The inlet of the thermal management system is typically arranged in connection with one or several types of fans, adapted to direct air towards the system. In other words, the system is typically arranged to receive a flow of ambient air. The ambient air flow is being blown by one or several fan(s). In addition, or alternatively, the air flow may arise from the wind speed when driving the vehicle in a forward direction. Thus, in one design variant of the system, the system is provided without a fan, i.e. no fan is used, which means that only wind speed or the environmental temperature difference is used to cool off the coolant assembly.

The energy storage system is typically configured to provide power to the electrical machine. In this manner, the ESS is arranged to provide propulsion for the vehicle and also to power any other types of electric systems in the vehicle. As mentioned above, the thermal management system is arranged to cool and/or heat the ESS. The energy storage system is typically an electrical energy storage system. Further, the energy storage system is typically a DC electrical power source. By way of example, the energy storage system is a battery pack arrangement (a system of interconnected battery packs). The DC electrical power source may be provided in the form of a battery pack arrangement or an onboard fuel cell system. It is to be noted that the battery pack arrangement can refer to one or several number of battery pack(s). In addition, or alternatively, each one of the battery packs can include a plurality of battery modules as described herein. In addition, or alternatively, it is to be noted that the battery pack arrangement can include different types of batteries. By way of example, any one of the battery packs in the battery pack arrangement is any one of a lithium-ion battery or sodium-ion battery. A sodium-ion battery typically includes any type of sodium iron battery or sodium ferrite battery. The battery pack arrangement thus typically comprises a set of battery packs. Also, it is to be noted that the battery pack is generally a so called high voltage battery pack. In this context, the term "high voltage" preferably refers to a battery pack of more than 60 voltage (V), preferably a battery pack of about 300 - 1300 voltage (V), still preferably a battery pack of about 400 - 1000 voltage (V). Further, the term "power", as used herein, typically refers to electrical power.

Thus, according to one example embodiment, the energy storage system is a high voltage battery comprising a number of battery cells.

By way of example, the thermal management system may be used for regulating a temperature of a fluid circuit of the ESS. According to one example embodiment, the ESS comprises a fluid circuit configured to define a fluid passageway for circulating a coolant therethrough. The fluid circuit has an inlet for liquid inflow and an outlet in fluid communication with the inlet, for outflow of the liquid. The fluid circuit is e.g. a channel. The fluid circuit typically comprises a liquid coolant in the channel. One example of a suitable liquid is water and ethylene glycol mixture. The coolant may also be an oil, or a combination of oil and a water-based fluid. In another example, the coolant may be a fluid such as a gas. It should be noted that the ESS typically comprises the coolant. In addition, the coolant is contained in the fluid circuit of the ESS, corresponding to the channel. Accordingly, in the fluid circuit, a liquid coolant is transportable, typically with the aid of one or more pump units. The liquid coolant can be used to remove heat from the ESS and also to provide heating of the battery pack for fast charging at low temperatures, and/or for more rapid cold start.

The thermal management system may also be arranged to regulate a temperature of other heat generating component. In this context, the term "heat generating component" refers to a vehicle component that generates thermal energy or heat, e.g. during an operational state of the vehicle. This type of vehicle component typically needs to be cooled in order to guarantee its function in the vehicle. The vehicle heat generating component is located on or in the vehicle. Examples of vehicle heat generating components are, besides battery packs, any one of the following components: electronic devices, electronic circuits, inverters, including power inverters, i.e. devices that use the battery pack to power electrical appliances, electric motors, DC/DC converters, on-board chargers, hydraulic components, combustion engine(s), charge air coolers (cac), air conditioning systems etc.

According to a second aspect of the present invention, there is provided a vehicle system comprising a pneumatic auxiliary system and a thermal management system according to any one of the example embodiments and/or the features as described above in relation to the first aspect of the present invention, wherein the thermal management system is arranged to supply compressed air to the pneumatic auxiliary system. Effects and features of the second aspect are largely analogous to those described above in relation to the first aspect of the present invention. The pneumatic auxiliary system is generally arranged in the vehicle. The pneumatic auxiliary system may be any one of an air system to control a suspension, air system to control a cab suspension, air system to control a brake and air system to control a gear box to shift gears. Any one of these air system may also be a sub-system of an overall pneumatic auxiliary system.

According to a third aspect of the present invention, there is provided a vehicle, which comprises a thermal management system according to any one of the example embodiments and/or the features as described above in relation to the first aspect of the present invention.

Effects and features of the second aspect are largely analogous to those described above in relation to the first aspect of the present invention.

The vehicle typically comprises an energy storage system in communication with the thermal energy management system. The vehicle may be a partly electric vehicle or fully electrical vehicle. The example embodiments are particularly useful for an electric-powered vehicle, such as an electric truck, electric bus or the like, i.e. a full electric machine. However, the example embodiments may likewise be installed in a partly electric-powered vehicle, such as a hybrid vehicle.

Typically, the vehicle further comprises a pneumatic auxiliary system in fluid communication with the thermal management system. The pneumatic auxiliary system is any one of an air system to control the suspension, to brake and to shift gears.

In addition, the vehicle may comprise a chassis. Further, the vehicle typically comprises an electric propulsion system including the battery pack arrangement. The vehicle typically comprises at least one electric machine, but may include additional electrical machines. The electrical machine(s) are configured to provide propulsion for the vehicle. Generally, the term "electric propulsion system", as used herein, typically refers to vehicle electrical components for providing energy (such as traction energy) and for storing energy (delivering and receiving energy). In other words, an electric propulsion system refers to a system configured to provide propulsion to a vehicle by converting electrical energy to mechanical energy, the electrical energy provided by means of the energy storage system, such as the battery pack arrangement. Besides the electrical components as mentioned above, an electric propulsion system may include additional components such as cable(s), sensor(s), control units, battery management unit(s) etc. The electric propulsion system is in particular configured to deliver and receive energy for providing propulsion to the vehicle, but also for performing various vehicle operations of the vehicle.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The various example embodiments of the invention, including its particular features and example advantages, will be readily understood from the following illustrative and nonlimiting detailed description and the accompanying drawings, in which:
Fig. 1 is a side view of a vehicle in the form of an electric-powered truck including an example embodiment of a thermal management system according to the present invention;
Fig. 2 schematically illustrates an example embodiment of a thermal management system for a vehicle according to the present invention;
Fig. 3 schematically illustrates another example embodiment of a thermal management system for a vehicle according to the present invention.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present invention.

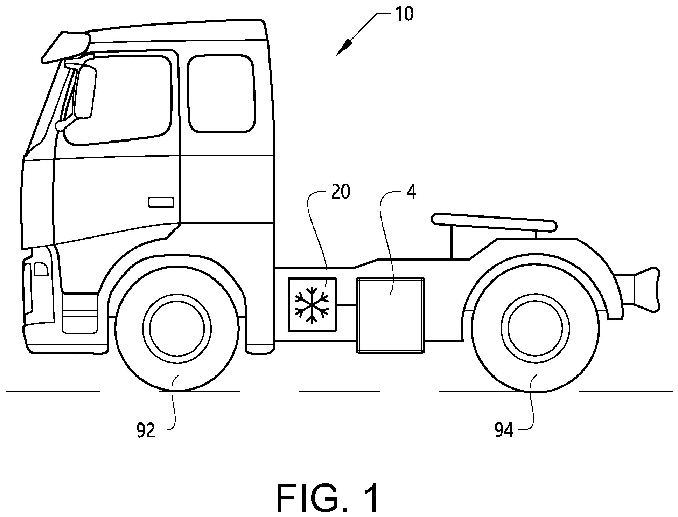

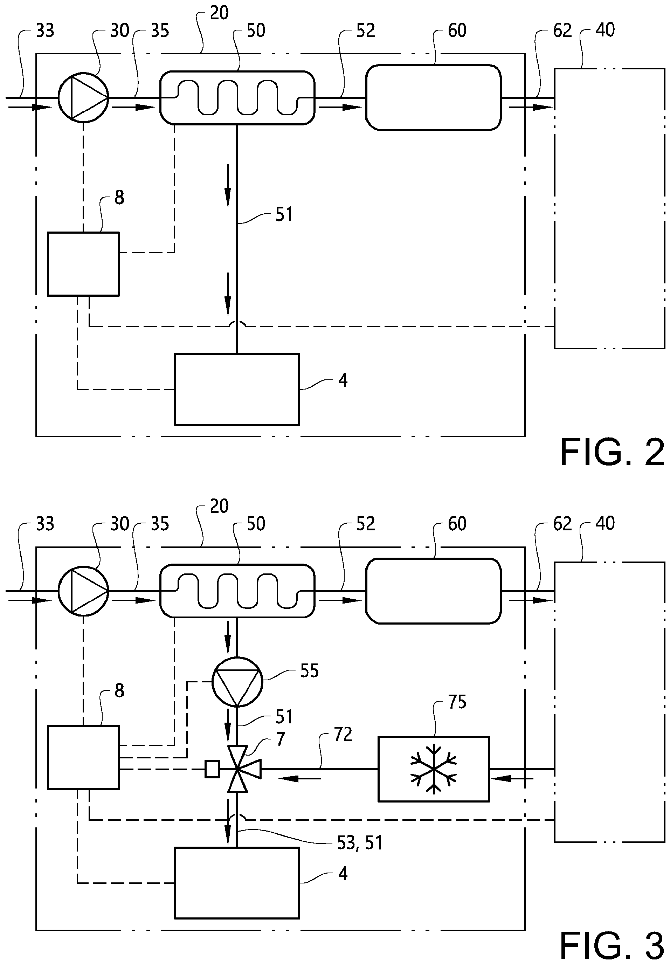

Referring now to the figures and e.g. Fig. 1 there is depicted a vehicle 10 in the form of a truck, in particular an electric-powered heavy-duty truck. The electric-powered truck is a fully electric truck. This type of vehicle typically comprises an electric propulsion system (not shown) for providing propulsion to the electrical truck. Besides providing propulsion to the vehicle, the electric propulsion system or the parts of system can manage other electronic functions of the vehicle. The electric propulsion system generally comprises an energy storage system such as a battery pack arrangement 4, as illustrated in e.g. Fig. 2 and 3. Although there are several different types of energy storage systems, and the battery pack arrangement is merely one example of an energy storage system, the description of the example embodiments of the invention will for ease of reference be described in relation a battery pack arrangement. The battery pack arrangement is here configured to power one or more electric components, such as electrical machines. The vehicle may further comprise a battery management unit (not shown) which is configured to control and monitor the battery pack arrangement.

Moreover, the electric propulsion system typically comprises one or more electric machines (not shown). The electrical machine is configured for driving a pair of ground engaging members, e.g. 92 and/or 94. In this example, the ground engaging members are provided in the form of wheels. Optional, the electrical propulsions system comprises a transmission (not shown) for transmitting a rotational movement from the electric machine to a propulsion shaft, sometimes denoted as the driven shaft. The propulsion shaft connects the transmission to the pair of wheel. Furthermore, although not shown, the electrical machine is typically coupled to the transmission by a clutch. The electrical machine can also be decoupled from the wheels by means of engaging a neutral gear of the transmission.

It should be noted that the vehicle can be of a variety of alternative types, e.g. it may be a bus, car, construction equipment or a working machine such as a wheel loader, hauler or the like. In particular, the vehicle may be an electric vehicle.

In this type of electric vehicle, all high voltage components may require cooling, e.g. inverters, electric motors and battery packs. The battery pack arrangement is particular sensitive and typically requires a lower temperature than other components. Thus, the electric vehicle comprises a thermal management system 20 for the battery pack arrangement according to any one of the example embodiments described hereinafter in relation to the Figs. 2 - 3. As will be further described herein, the thermal management system is arranged to pressurize another vehicle auxiliary system, such as a pneumatic auxiliary system, and to regulate a temperature of the energy storage system, e.g. a battery pack arrangement.

In this exemplary vehicle, the thermal management system 20 and the battery pack arrangement 4 are separate parts of the vehicle, while in fluid communication with each other. However, it also conceivable that the battery pack arrangement is an integral part of the thermal management system. Hence, in one example embodiment, the thermal management system comprises the battery pack arrangement. It may also be conceivable that the thermal management system 20 and the battery pack arrangement 4 are comprised in the electrical propulsion system. The battery pack arrangement typically comprises a plurality of battery packs. In this example, the battery packs are interconnected to each other. In this manner, the battery packs are inter-connectable battery packs, thus forming a battery pack arrangement. For instance, the battery pack arrangement comprises three battery packs. The number of battery packs in the battery pack arrangement varies depending on type of vehicle and type of installation, etc. A battery pack may be sensitive to temperature changes and often needed to be operated at an appropriate temperature or within an appropriate temperature range. By way of example, each one of the battery packs is a lithium-ion battery. Moreover, each one of battery packs comprises a number of battery cells. The number of battery cells in each battery pack and the overall number of battery cells varies depending on type of vehicle and type of installation, etc. In the following Figs. 2 and 3, the battery pack arrangement is illustrated as one single battery pack 4 for ease of reference.

Turning now to Fig. 2, there is depicted an example embodiment of a thermal management system for the vehicle described above in relation to Fig. 1. As illustrated in Fig. 2, the thermal management system 20 here comprises the battery pack arrangement 4. The thermal management system is generally arranged to regulate a temperature of the battery pack arrangement 4. However, the thermal management system 20 may also be arranged to regulate a temperature of other heat generating component.

As illustrated in Fig. 2, the thermal management system 20 is in fluid communication with a pneumatic auxiliary system 40. The pneumatic auxiliary system 40 is a part of the vehicle. The pneumatic auxiliary system may e.g. be any one of an air system to control a suspension, to control a cab suspension, control a brake to brake and control a gear box to shift gears etc.

Accordingly, the thermal management system is connected to the pneumatic auxiliary system 40 in order to supply compressed air so as to pressurize the pneumatic auxiliary system 40.

Moreover, the thermal management system 20 comprises an air compressor 30, as illustrated in Fig. 2. The air compressor 30 is arranged to supply compressed air to the pneumatic auxiliary system 40. Typically, the air compressor has an inlet 33 for receiving air, such as fresh air from the outside of the vehicle. The air compressor is here optionally powered by the battery pack arrangement 4. Although not shown, the battery pack arrangement is typically operatively connected to the air compressor 30. It is also conceivable that the air compressor is powered from another power source, such as another battery, e.g. a low voltage battery.

Further, thermal management system 20 comprises a heat exchanger 50. As illustrated in Fig. 2, the heat exchanger 50 is arranged downstream of the air compressor 30 to receive compressed air from the air compressor. The heat exchanger is in fluid communication with the air compressor, e.g. by a fluid passage 35. The fluid passage 35 connects the heat exchanger and the air compressor. In the air compressor, the air volume is compressed to an appropriate level, thus causing the compressed air to increase in temperature. The compressed air may be up to 450 degrees Celsius.

The heat exchanger 50 is arranged to at least partly cool the compressed air from the air compressor 30. Subsequently, the heat exchanger 50 is arranged to supply the cooled compressed air to the pneumatic auxiliary system 40. In order to accommodate the compressed air prior to supply the compressed air to the pneumatic auxiliary system 40, there is arranged a reservoir 60 in between the heat exchanger 50 and the pneumatic auxiliary system, as illustrated in Fig. 2. In other words, the reservoir 60 is arranged downstream of the heat exchanger 50. The reservoir can be designed in several different manners as long as it can accommodate the compressed air. In this manner, it becomes possible to ensure that the pneumatic auxiliary system can be operated by compressed air even in the event that the air compressor is not operating in a functional manner. The heat exchanger 40 is typically connected to the reservoir by a fluid passage 52. Thus, the heat exchanger is in fluid communication with the reservoir 60. Moreover, the reservoir 60 is typically in fluid communication with the pneumatic auxiliary system, e.g. by a fluid passage 60, as illustrated in Fig. 2, and also in Fig. 3.

It should be noted that in the context of the example embodiments, the terms "downstream" and "upstream", as used herein, are terms that essentially indicate a direction relative to the flow of the compressed air through parts of the thermal management systems. As such, the term "downstream" refers to a direction that generally corresponds to the direction of the flow of coolant, and the term "upstream" generally refers to the direction that is opposite of the direction of flow of the compressed air. By way of example, the term "downstream" refers to a direction that generally corresponds to the direction of the flow of compressed air from the thermal management systems, and the term "upstream" generally refers to the direction that is opposite of the direction of flow of the compressed air from the thermal management systems. The direction of flow of the compressed air is indicated with arrows in the Figs. 2 and 3.

Turning again to the heat exchanger 50 and Fig. 2, the heat exchanger 50 is further arranged in fluid communication with the battery pack arrangement 4. In this example embodiment, the heat exchanger is arranged in fluid communication with the battery pack arrangement by means of a fluid passage 51. Accordingly, the heat exchanger 50 is arranged to receive compressed air from the air compressor 30, and further arranged to decrease the temperate of the compressed air being transferred through the heat changer. Hence, the heat exchanger 50 is operable to decrease a temperature of the compressed air transferred through the heat exchanger and prior to supplying the compressed air to the pneumatic auxiliary system 40.

Since the heat exchanger 50 of the thermal management system 20 is arranged in fluid communication with the battery pack arrangement 4, any excessive energy generated in the heat exchanger is transferable to the battery pack arrangement 4 via the fluid passage 51. More specifically, a certain amount of excessive energy is generated in the heat exchanger when decreasing the temperature of the compressed air in heat exchanger. Due to the function of the heat exchanger, the excessive energy is generated as thermal energy. By connecting the heat exchanger with the battery pack arrangement, the thermal energy can be transferred to the battery pack arrangement via the fluid passage 51 so as to regulate the temperature of the battery pack arrangement.

By way of example, the excessive energy transferred from the heat exchanger is used for regulating the temperature of a liquid circulating around the battery pack arrangement. The liquid may e.g. be a coolant. While the coolant is typically a liquid fluid, the type of coolant may vary depending on type of vehicle and type of installation. Typically, the coolant is water-based. By way of example, the coolant is water-based with the addition of glycols to prevent freezing and other additives to limit corrosion, erosion and cavitation etc. The liquid coolant may accordingly be water blended with ethylene glycol, ammonia, or any other suitable liquid coolant. The coolant may also be oil, or a combination of oil and a water-based fluid. In another example, the coolant may be a fluid such as a gas. The coolant is typically transported in a fluid circuit (not shown) of the battery pack arrangement. In other words, in this example, the battery pack arrangement also comprises the coolant. In addition, the coolant is typically contained in the fluid circuit of the battery pack arrangement. The coolant in the battery pack arrangement is generally transportable in the fluid circuit of the battery pack arrangement by means of a pump unit (although not shown). It should be readily appreciated that each battery pack may be cooled by circulation of a water based coolant through cooling passages within the battery structure of each battery pack.

Depending on the temperature of the battery pack arrangement, and thus the temperature of the coolant, the excessive energy from the heat changer is used to either decrease or increase the temperature of the battery pack arrangement.

Accordingly, in this example embodiment, the heat exchanger and excessive energy generated from the heat exchanger due to cooling of the compressed air is utilized to regulate (increase or decrease) the temperature of a portion of the coolant to a first temperature. In order to ensure that the temperature of the battery pack arrangement is regulated to an appropriate level, the thermal management system typically, although strictly not required, comprises a control unit 8. The control unit 8 is arranged to regulate the transfer of excessive heat from the heat exchanger 50 to the battery pack arrangement. In this example, the control unit 8 is arranged to regulate the transfer of excessive heat from the heat exchanger 50 to the battery pack arrangement in response to an operating condition of the battery pack arrangement 4. By way of example, the operating condition may be a temperature of the battery pack arrangement. The temperature of the battery pack arrangement can be determined by the control unit. Typically, there is provided a temperature sensor arranged to monitor the temperature of the battery pack arrangement. Thus, the control unit is here also connected to the temperature sensor, where the temperature sensor is used for acquiring an indication of the temperature of the battery pack arrangement Data relating to the monitored temperature of the battery pack arrangement is subsequently transferred from the sensor to the control unit. In other examples, the operating condition may be any one of an outside temperature of the vehicle, a state-of-charge parameter of the battery pack, an estimated upcoming driving condition, a predictable driver/driving behavior of the vehicle, and a combination thereof. It should be readily appreciated that the thermal management system thus may comprise a number of sensors to determine any one of the operating conditions above. Further, the control unit may also be arranged in communication with other control units of the vehicle to receive data indicating any one of the operating conditions above.

Optionally, although not strictly required, the control unit 50 is arranged to control the transfer of compressed air between the air compressor and the heat exchanger in response to the operating condition of the ESS.

The communication of the control unit to the various components of the thermal management system is indicated by the dotted lines in Fig. 2. Accordingly, it can be noted that the control unit 8 is also typically in communication with the pneumatic auxiliary system 40. In other words, the control unit 8 is here in communication with the air compressor 30, the heat exchanger 50, the battery pack arrangement 4 and the pneumatic auxiliary system 40.

The heat exchange may e.g. be an air-to-coolant heat exchangers to produce an air flow through the heat exchanger in order to cool the compressed air. The heat exchanger may also be an electric heat exchanger which uses the same line voltage as the other electric components in the vehicle, which line voltage is usually 24 V for trucks, busses and construction equipment and 12V for passenger cars. In addition, the line voltage may in other examples be 400 V, 600 V.

Another example of a thermal management system according to another example embodiment is described in relation to Fig. 3. The thermal management system described in relation to Fig 3 typically comprises all features and components as described in relation to the example embodiment in Fig. 2. In addition, while now referring now to Fig 3, there is depicted another example embodiment of the thermal management system, which is intended for installation in a vehicle as described in relation to Fig. 1 above.

Besides the components as described in example in relation to Fig. 2, i.e. the air compressor, heat exchanger, control unit, battery pack arrangement, reservoir, etc., the thermal management system in Fig 3, typically comprises several additional features.

As illustrated in Fig. 3, in this example embodiment, the control unit 8 regulates the transfer of excessive heat from the heat exchanger 50 to the battery pack arrangement by means of controllable valve 55. As illustrated in Fig. 3, the controllable valve 7 is arranged in-between the heat exchanger 50 and the battery pack 4. That is, the controllable valve is arranged in the fluid passage 51. Accordingly, the control unit here comprises a control sub-device 7 in the form of a controllable valve, which is arranged in communication with the heat exchanger and the battery pack arrangement. The controllable valve 7 is arranged in-between the heat exchanger and the battery pack arrangement to control the temperature of the fluid medium (coolant) transferred between the heat exchanger and the battery pack arrangement. In other words, the controllable valve 7 is arranged to direct the flow of coolant to the battery pack arrangement for regulating the temperature of the battery pack arrangement. In Fig. 3, the controllable valve 7 is arranged upstream of the battery pack arrangement in a second path 53 of the fluid passage 51, as illustrated in Fig. 3. To this end, the fluid passage 51 between the heat exchanger and the battery pack arrangement comprises a first path and a second path. The first path extends between the heat exchanger and the controllable valve. The second path extends between the controllable valve and the battery pack arrangement. As illustrated in Fig. 3, the controllable valve is in fluid communication with the heat exchanger and the battery pack arrangement.

Optionally, if the thermal management system comprises a cooling system for cooling the pneumatic auxiliary system, the cooling system may be arranged in communication with the battery pack arrangement via the controllable valve 7. In Fig. 3, the cooling system 75 is arranged in communication with the controllable valve by fluid passage 72. Typically, the fluid passage contains a coolant. The coolant in fluid passage 72 is typically of a same type of coolant as the one described above in relation to the coolant in fluid passage 51. In this manner, the cooling system 75 is arranged to receive air from the pneumatic auxiliary system so as to decrease the temperature of the air by decompression. By the process of decompressing the air in the cooling system, the temperature of the air will decrease to a lower temperature. The lower temperature of the decompressed air can subsequently be used to decrease the temperature of the battery pack 4 by cooling down the coolant in fluid passage 72, and permit the coolant to enter the fluid passage 53 of passage 51 via the controllable valve 7. The controllable valve is, as mentioned above, operated by the control unit 8. Further, the pump 55 may aid in transporting the coolant to the ESS, as mentioned above. To this end, in this example, the controllable valve 7 is in fluid communication with the cooling system 75. In other words, the thermal management system here comprises the cooling system 75 for cooling the pneumatic auxiliary system 40, as illustrated in Fig. 3, and which is further arranged to support in cooling the battery pack arrangement as described above.

The communication between the controllable valve 7 and the cooling system 75 can also be operated in an opposite direction. That is, the controllable valve can be arranged to transfer excessive heat to the cooling system via the fluid passage 72 to ensure that excessive heat from the heat exchanger can be transported away from the battery pack arrangement when there is no further need for heating the battery pack arrangement. That is, at some point in time, the battery may not need more heat from the heat exchanger. By means of the controllable valve arranged as described above, the controllable valve can be controlled to transfer the excessive heat from the battery. By way of example, the excessive heat can be transferred to the cooling system 75 in a fluid passage 72.

Accordingly, as illustrated in the example embodiment in Fig. 3, the system 20 here comprises the control unit 8, similar to the control unit described in relation to Fig.2. The control unit is here arranged to communicate with the controllable valve 7 so as to control the valve, as mentioned above. By way of example, the control unit is adapted to control the valve to selectively direct the flow of excessive heat to the battery pack arrangement and the cooling system.

In addition, or alternatively, the control unit may be a part of another system in the vehicle. For instance, the vehicle comprises the control unit to perform the operational steps of controlling the thermal management system in order to perform the temperature control according to the example embodiments as described herein. In other designs of the system and the vehicle, the control unit may be arranged in another remote location of the vehicle.

Moreover, in the example embodiment described in relation to Fig.3, the thermal management system comprises a pump 55 for supporting the transfer of the excessive energy from the heat exchanger 50 to the battery pack arrangement 4. The pump 55 is arranged in fluid communication with the heat exchanger and the battery pack arrangement. Hence, the pump 55 is arranged to provide support to the heat exchanger to transfer the excessive heat to the battery pack arrangement 4. The pump is here arranged in the fluid passage 51 in order to enhance the distribution of energy from the heat exchanger to the battery pack arrangement. As illustrated in Fig.3, the control unit 8 is typically also in communication with the pump 55. The control unit is arranged to operate the pump in response to the operating condition, as mentioned above.

As a supplement to the pump, the thermal management system may use a fan for the same function. That is, in the example embodiment described in relation to Fig.3, the thermal management system may comprise a fan 55 for supporting the transfer of the excessive energy from the heat exchanger to the battery pack arrangement. Hence, the fan is arranged to provide support to the heat exchanger to transfer the excessive heat to the battery pack arrangement. The fan is here arranged in connection to the fluid passage 51 in order to enhance the distribution of energy from the heat exchanger to the battery pack arrangement. As illustrated in Fig.3, the control unit 8 is typically also in communication with the fan 55. The fan may in some examples be replaced with a pump. A combination of a fan and a pump to support in the transfer of excessive energy is also conceivable.

Further, it may be noted that there will only be excessive energy (e.g. heat) when the air compressor is running. Moreover, it should be readily appreciated that the heat exchanger may be an integral part of the air compressor. In other examples, as described in relation to Fig. 2 and Fig. 3, the heat exchanger is a separate part from the air compressor.

It is to be understood that the present invention is not limited to the embodiments described above and illustrated in the drawings; rather, the skilled person will recognize that many changes and modifications may be made within the scope of the appended claims. Thus even though the disclosure has been described with reference to specific exemplifying embodiments thereof, many different alterations, modifications and the like will become apparent for those skilled in the art.

Variations to the disclosed embodiments can be understood and effected by the skilled addressee in practicing the claimed disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A thermal management system (20) for an energy storage system (ESS) (4) of a vehicle (5), the thermal management system comprising:
- the ESS (4) for storing electrical energy;
- an air compressor (30) for supplying compressed air to a pneumatic auxiliary system (40) of the vehicle;
- a heat exchanger (50) arranged downstream of the air compressor to receive compressed air from the air compressor, wherein the heat exchanger is operable to decrease a temperature of the compressed air being transferred through the heat exchanger, and
- wherein the heat exchanger is further arranged in fluid communication with the ESS to permit transfer of excessive energy generated in the heat exchanger to the ESS.

2. Thermal management system according to claim 1, further comprising a control unit (8) arranged to regulate the transfer of excessive energy from the heat exchanger to the ESS in response to an operating condition of any one of the vehicle and the ESS.

3. Thermal management system according to claim 2, wherein the operating condition is any one of a temperature of the ESS, an outside temperature of the ESS, an outside temperature of the vehicle, a state-of-charge parameter of the ESS, an estimated upcoming driving condition, a predictable driver/driving behavior of the vehicle, and a combination thereof.

4. Thermal management system according to claims 2 or 3, further comprising a controllable sub-device (7) arranged in communication with the heat exchanger and the ESS, the controllable sub-device being operable by the control unit.

5. Thermal management system according to claim 4, wherein the controllable sub-device is arranged in-between the heat exchanger and the ESS to regulate a flow of a fluid medium transferable between the heat exchanger and the ESS.

6. Thermal management system according to any one of the claims 2 to 5, wherein the control unit is arranged to control the transfer of compressed air between the air compressor and the heat exchanger in response to the operating condition.

7. Thermal management system according to any one of the preceding claims, further comprising a reservoir (60) arranged downstream of the heat exchanger and adapted to accommodate the compressed air.

8. Thermal management system according to any one of the preceding claims, further comprising fluid transfer device (55), such as a fan or pump, for providing energy to support fluid transfer from the heat exchanger to the ESS.

9. Thermal management system according to any one of the preceding claims, wherein the ESS is arranged to power the air compressor.

10. Thermal management system according to any one of the preceding claims, wherein the ESS is a high voltage battery comprising a number of battery cells.

11. A vehicle system comprising a pneumatic auxiliary system and a thermal management system according to any one of the preceding claims, wherein the thermal management system is arranged to supply compressed air to the pneumatic auxiliary system.

12. A vehicle (5), such as a partly electric vehicle or fully electric vehicle, comprising a thermal management system according to any one of the claims 1 to 10.

13. Vehicle according to claim 11, further comprising a pneumatic auxiliary system in fluid communication with the thermal management system.
